# EUROPEAN PATENT APPLICATION

(11) **EP 4 164 278 A1**
(43) Date of publication of application: **12.04.2023**
(21) Application number: 21822892.2
(22) Date of filing: 09.06.2021
(51) Int. Cl.: H04W 24/02

(54) **POWER HEADROOM REPORT (PHR) REPORTING METHOD AND DEVICE AND TERMINAL**

(30) Priority: 09.06.2020 CN 202010526468
(71) Applicant: Vivo Mobile Communication Co., Ltd., Dongguan, Guangdong 523863 (CN)
(72) Inventor: PU, Wenjuan, Dongguan, Guangdong 523863 (CN); YANG, Xiaodong, Dongguan, Guangdong 523863 (CN)
(74) Representative: Winter, Brandl - Partnerschaft mbB
(86) International application number: PCT/CN2021/099108
(87) International publication number: WO 2021/249426

(57) **Abstract**

This application discloses a PHR reporting method and apparatus, and a terminal. The method includes: triggering a PHR in a case that a first condition is satisfied, where the first condition includes any one of the following: condition 1: a path loss of at least one serving cell of any MAC entity satisfies a second condition, where the serving cell is in an activated state; condition 2: a first PHR periodic timer expires; condition 3: a cell group is resumed; condition 4: a special cell SpCell is activated, where the special cell includes a primary cell PCell or a primary secondary cell PSCell; condition 5: a second PHR periodic timer expires; condition 6: the serving cell switches from a dormant BWP to a non-dormant BWP, and a PHR prohibit timer expires; and condition 7: the PHR prohibit timer expires, and a first parameter is having a first value.

## Description

### CROSS-REFERENCE TO RELATED APPLICATIONS

This application claims priority to Chinese Patent Application No. 202010526468.X, filed in China on June 9, 2020, which is incorporated herein by reference in its entirety.

### TECHNICAL FIELD

This application belongs to the field of communication technologies, and in particular, to a power headroom report (Power Headroom Report, PHR) reporting method and apparatus, and a terminal.

### BACKGROUND

With the development of communications technologies, communications systems are becoming increasingly improved. To make functions of the communications system more complete, introduction of application scenarios to current communications systems is being discussed, including: a new state of a cell group, for example, a suspended state of a cell group, a special cell (Special Cell, SpCell) in a cell group being allowed to switch to an inactive state, and switching of a cell between a dormant bandwidth part (dormant Bandwidth Part, dormant BWP) and a non-dormant (non-dormant) BWP. In these new scenarios, PHR reporting according to a currently defined power headroom report (Power Headroom Report, PHR) reporting process will make a network device unable to effectively obtain PHRs in a timely manner, affecting optimization of scheduling and control performance of the network device.

### SUMMARY

Embodiments of this application aim to provide a power headroom report PHR reporting method and apparatus, and a terminal, so as to resolve the problem that optimization of scheduling and control performance of a network device is affected because of the inability to effectively obtain PHRs in a timely manner.

In order to resolve the foregoing technical problem, this application is implemented as follows:

According to a first aspect, a power headroom report PHR reporting method is provided. The method is applied to a terminal and includes:
triggering a PHR in a case that a first condition is satisfied, where
the first condition includes any one of the following:
   condition 1: a path loss of at least one serving cell of any media access control (Media Access Control, MAC) entity satisfies a second condition, where the serving cell is in an activated state;
   condition 2: a first PHR periodic timer expires, where the first PHR periodic timer is used for periodically triggering PHRs for an SCell of the terminal;
   condition 3: a cell group is resumed, where the cell group includes a master cell group (Master Cell Group, MCG) or a secondary cell group (Secondary Cell Group, SCG);
   condition 4: a special cell SpCell is activated, where the special cell includes a primary cell PCell or a primary secondary cell (Primary Secondary Cell, PSCell);
   condition 5: a second PHR periodic timer expires, where the second PHR periodic timer is used for periodically triggering PHRs for the SpCell of the terminal;
   condition 6: the serving cell switches from a dormant bandwidth part BWP to a non-dormant BWP, and a PHR prohibit timer expires; and
   condition 7: the PHR prohibit timer expires, and a first parameter is having a first value.

According to a second aspect, a power headroom report PHR reporting apparatus is provided. The apparatus includes:
a processing module, configured to trigger a PHR in a case that a first condition is satisfied, where
the first condition includes any one of the following:
   condition 1: a path loss of at least one serving cell of any media access control MAC entity satisfies a second condition, where the serving cell is in an activated state;
   condition 2: a first PHR periodic timer expires, where the first PHR periodic timer is used for periodically triggering PHRs for an SCell of the terminal;
   condition 3: a cell group is resumed, where the cell group includes a master cell group MCG or a secondary cell group SCG;
   condition 4: a special cell SpCell is activated, where the special cell includes a primary cell PCell or a primary secondary cell PSCell;
   condition 5: a second PHR periodic timer expires, where the second PHR periodic timer is used for periodically triggering PHRs for the SpCell of the terminal;
   condition 6: the serving cell switches from a dormant bandwidth part BWP to a non-dormant BWP, and a PHR prohibit timer expires; and
   condition 7: the PHR prohibit timer expires, and a first parameter is having a first value.

According to a third aspect, a terminal is provided. The terminal includes a processor, a memory, and a program or instructions stored in the memory and executable on the processor. When the program or instructions are executed by the processor, the steps of the method according to the first aspect are implemented.

According to a fourth aspect, a readable storage medium is provided. The readable storage medium stores a program or instructions. When the program or instructions are executed by a processor, the steps of the method according to the first aspect are implemented.

According to a fifth aspect, an embodiment of this application provides a chip. The chip includes a processor and a communications interface, where the communications interface is coupled to the processor, and the processor is configured to run a program or instructions to implement the method according to the first aspect.

In the embodiments of this application, trigger conditions for PHR reporting are defined for application scenarios such as a suspended state of a cell group, an SpCell in a cell group being allowed to switch to an inactive state, and switching of a cell between a dormant BWP and a non-dormant BWP. Therefore, a terminal can have more PHR reporting opportunities without repeatedly sending PHRs of same serving cells, thereby ensuring that a network device can obtain PHRs more effectively in a more timely manner. This helps the network device optimize scheduling and control.

### BRIEF DESCRIPTION OF DRAWINGS

FIG. 1 is a structural diagram of a network system to which embodiments of this application are applicable;
FIG. 2 is a flowchart of a PHR reporting method according to an embodiment of this application;
FIG. 3 is a structural diagram of a PHR reporting apparatus according to an embodiment of this application;
FIG. 4 is a structural diagram of a terminal according to an embodiment of this application; and
FIG. 5 is a structural diagram of another terminal according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

In the specification and claims of this application, the terms such as "first" and "second" are intended to distinguish between similar objects but do not necessarily indicate a specific order or sequence. It should be understood that data used in such a way is interchangeable in appropriate circumstances so that the embodiments of this application can be implemented in an order other than the order illustrated or described herein. Moreover, "first" or "second" is used to distinguish typically objects of one type without limiting a quantity of these objects. For example, there may be one or more first objects. In addition, in the specification and claims, "and/or" represents presence of at least one of connected objects, and the symbol "/" in this specification usually indicates an "or" relationship between associated objects.

It should be noted that technology described in the embodiments of this application is not limited to the long term evolution (Long Term Evolution, LTE) or LTE-Advanced (LTE-Advanced, LTE-A) system, but may also be applied to various wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably. Techniques described may be used in the aforementioned systems and radio technologies, and can also be used in other systems and radio technologies. However, in the following descriptions, a new radio (New Radio, NR) system is described for an illustration purpose, and NR terms are used in most of the following descriptions, although these technologies may also be applied to other applications than an NR system application, for example, the sixth (6th Generation, 6G) communications system.

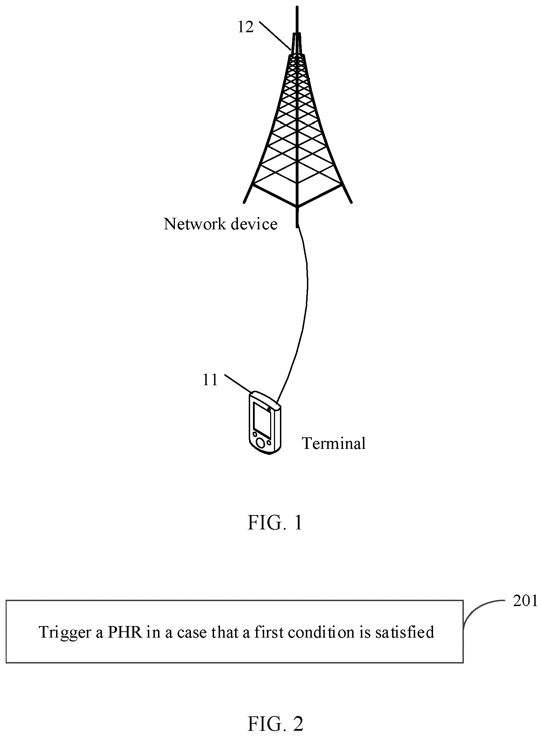

FIG. 1 is a block diagram of a wireless communications system to which the embodiments of this application are applicable. The wireless communications system includes a terminal 11 and a network-side device 12. The terminal 11 may also be referred to as a terminal device or user equipment (User Equipment, UE). The terminal 11 may be a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or a vehicle-UE (VUE), a pedestrian-UE (PUE), or another terminal-side device. The wearable device includes a wristband, an earphone, glasses, and the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a WiFi node, a transmission and reception point (Transmission and Reception Point, TRP), or other appropriate terms in the art, provided that the same technical effects are achieved. The base station is not limited to specific technical terminology. It should be noted that in the embodiments of this application, a base station in the NR system is used as an example only, which does not limit a specific type of the base station.

For ease of understanding, the following describes some content included in the embodiments of this application.

### I. Dual connectivity (Dual Connectivity, DC) and carrier aggregation (Carrier Aggregation, CA)

DC provides UE with resources of two network nodes. One of the network nodes is referred to as a master node (Master Node, MN); and the other one is referred to as a secondary node (Secondary Node, SN). CA technology is used at each network node, meaning the UE is configured with a series of serving cells controlled by the node, which are also referred to as a cell group (cell group). A cell group controlled by the MN is a master cell group (Master Cell Group, MCG); and a cell group controlled by the SN is a secondary cell group (Secondary Cell Group, SCG). Each cell group includes one SpCell and a series of secondary cells (Secondary Cell, Scell ). A special cell in the MCG is referred to as a primary cell (Primary Cell, PCell); and a special cell in the SCG is referred to as a primary secondary cell (Primary Secondary Cell, PSCell). In one cell group, the SpCell uses a master carrier and secondary cells use secondary carriers; and resource scheduling in the cell group is performed by the SpCell. The network node may also be referred to as an access network network element.

### II. SCell state

In new radio (New Radio, NR), states of an SCell include activated (activated), activated with dormant BWP, and deactivated (deactivated). In the embodiments of this application, being activated may be understood as the SCell being in the activated state and working on a non-dormant BWP (non-dormant BWP), that is, being activated is understood as being activated with non-dormant BWP by default; and being activated with dormant BWP may be understood as the SCell being in the activated state and working on a dormant BWP, , which may be referred to briefly as being activated with dormant.
1. When the SCell is activated, behavior of the UE includes:
   transmitting a sounding reference signal (Sounding Reference Signal, SRS) on the SCell;
   reporting channel state information (Channel State Information, CSI) for the SCell;
   monitoring a physical downlink control channel (Physical downlink control channel, PDCCH) on the SCell;
   monitoring a PDCCH for the SCell; and
   transmitting a physical uplink control channel (Physical Uplink Control Channel, PUCCH) on the SCell, if configured.
2. When the SCell is deactivated, behavior of the UE includes:
   transmitting no SRS on the SCell;
   reporting no CSI for the SCell;
   monitoring no PDCCH on the SCell;
   monitoring no PDCCH for the SCell; and
   transmitting no uplink shared channel (Uplink Shared Channel, UL-SCH)/physical random access channel (Physical Random Access Channel, PRACH)/PUCCH on the SCell.
3. When the SCell is activated with dormant BWP, behavior of the UE may include:
   monitoring no PDCCH; and
   performing CSI measurement.

### III. NR SCell state switching

Radio resource control (Radio Resource Control, RRC) may directly configure the SCell with a corresponding state or behavior. For example, RRC signaling may be used to directly configure the SCell to be deactivated. Alternatively, when an identity (ID) of a first active BWP (first active BWP) is not equal to a dormant BWP identity (dormant BWP ID), the RRC signaling may be used to directly configure the SCell to be activated; or when the ID of the first active BWP is equal to the dormant BWP ID, the RRC signaling may be used to directly configure the SCell to be activated with dormant BWP.

When the ID of the first active BWP is not equal to the dormant BWP ID, a media access control control element (Medium Access Control Control Element, MAC CE) may switch the SCell from deactivated to activated; or when the ID of the first active BWP is equal to the dormant BWP ID, the MAC CE may switch the SCell from deactivated to activated with dormant BWP.

Physical layer signaling may control the SCell to switch between activated and activated with dormant BWP, which is to control the SCell to switch between a non-dormant BWP and a dormant BWP.

A timer (for example, deactivation timers) may control the SCell to switch from activated or activated with dormant BWP to deactivated.

### IV. SCG suspended (suspended)

SCG suspended may also be referred to as SCG deactivated; and SCG resumed may also be referred to as SCG activated.

When the UE has been under low data load transmission over a long time, a network can temporarily suspend the SCG, instead of directly deleting the SCG and adding the SCG back when a high data load appears. When the SCG is temporarily suspended, the terminal can work in a more power-saving manner for a relatively long period of time, and the SCG can be resumed quickly when a large load of data is required.

### V. PHR

A PHR is used to report a difference between estimated uplink transmission power and maximum transmit power of the UE to a gNB. The PHR provides the gNB with information about power control and scheduling. RRC configures a PHR periodic timer (phr-PeriodicTimer), a PHR prohibit timer (phr-ProhibitTimer), and a power factor change parameter (phr-Tx-PowerFactorChange) to control the PHR procedure.

A trigger condition of a PHR may include the following several cases:
1. The phr-ProhibitTimer expires or has expired and the path loss has changed more than phr-Tx-PowerFactorChange dB as configured since the last transmission of a power headroom report, when the UE has an uplink resource for new transmission.
2. The phr-PeriodicTimer expires.
3. The RRC layer configures or reconfigures a PHR function or parameter, where such configuration or reconfiguration is not an operation of disabling PHR.
4. An SCell with a configured uplink (configured uplink) of any MAC entity is activated.
5. APSCell is added.
6. The phr-ProhibitTimer expires or has expired and the power backoff for a given uplink carrier has changed more than phr-Tx-PowerFactorChange dB as configured, when the UE has an uplink resource for new transmission.

The following application scenarios may be discussed for a communications system: a suspended state of a cell group, an SpCell of a cell group being allowed to switch to an inactive state, and switching of a cell between a dormant BWP and a non-dormant BWP. In this case, the following problems are present:

Some SCells fails to trigger a PHR when being activated. For example, when the ID of the first active BWP is the same as the dormant BWP ID, the dormant BWP is activated when the SCell is activated while no PHR is triggered.

A PHR may be triggered or may not be triggered upon switching from the dormant BWP to the non-dormant BWP. In an embodiment, no PHR is triggered upon switching from the dormant BWP to the non-dormant BWP; and it is possible that still no PHR can be triggered when the SCell is in the activated state. For example, for some SCells that are in an activated state and for which an MAC CE indicates a resource available for new data transmission and the PHR prohibit timer expires (has expired), no PHR can be triggered due to lack of a path loss reference value. In another embodiment, a PHR is triggered upon switching from the dormant BWP to the non-dormant BWP. However, it is possible that PHRs of same cells are reported frequently. Specifically, a network device may control a serving cell to switch from deactivated to activated via RRC signaling or an MAC CE. After switching to the activated state, the serving cell may directly enter a non-dormant BWP or a dormant BWP. In the case that the serving cell enters the dormant BWP, the network device needs to control, via physical layer signaling again, the serving cell to switch to the non-dormant BWP. In this case, when the UE is configured with a plurality of serving cells, it is possible that some serving cells may directly switch to the non-dormant BWP via one layer of signaling while two layers of signaling are required to control some serving cells to switch to the non-dormant BWP. As a result, the terminal triggers a number of PHRs in a short time. Because a reported PHR includes a PHR of a serving cell in an activated state, repeated content will be present in the reports. In another case, PHRs are triggered when some serving cells switch from a deactivated state to an activated state; and PHRs also need to be triggered when the other serving cells switch from the dormant BWP to the non-dormant BWP. If the network needs to reply to data of the terminal immediately, the network may possibly send two types of control information to the UE in a short time, so as to switch several serving cells to the non-dormant BWP. As a result, the UE triggers a number of PHRs, and repeated content is present in these reports. For example, if the terminal triggers a PHR upon reception of physical layer signaling which switches the SCell from the dormant BWP to the non-dormant BWP, the terminal reports PHRs of all serving cells in the activated state. However, within a relatively short time interval before or after the physical layer signaling is received, the terminal has received state switching signaling that is sent by the network for other serving cells, causing the terminal to frequently send PHRs of same serving cells while parameters related to power headroom of these serving cells have not changed much.

A PHR has failed to be triggered when a cell group is resumed.

A PHR has failed to be triggered when an SpCell is activated.

In the foregoing processes, the network device cannot effectively obtain PHRs because the UE has failed to trigger PHRs in a timely manner or has repeatedly send PHRs of same serving cells.

In view of this, the PHR reporting method of this application is proposed.

With reference to the accompanying drawings, the following describes in detail the PHR reporting method in the embodiments of this application based on specific embodiments and application scenarios thereof.

Referring to FIG. 2, FIG. 2 is a flowchart of a PHR reporting method according to an embodiment of this application. The method is applied to a terminal. As shown in FIG. 2, the method includes the following steps.

Step 201: Trigger a PHR in a case that a first condition is satisfied.

The first condition includes any one of the following:
condition 1: a path loss of at least one serving cell of any media access control MAC entity satisfies a second condition, where the serving cell is in an activated state;
condition 2: a first PHR periodic timer expires, where the first PHR periodic timer is used for periodically triggering PHRs for an SCell of the terminal;
condition 3: a cell group is resumed, where the cell group includes a master cell group MCG or a secondary cell group SCG;
condition 4: a special cell SpCell is activated, where the special cell includes a primary cell PCell or a primary secondary cell PSCell;
condition 5: a second PHR periodic timer expires, where the second PHR periodic timer is used for periodically triggering PHRs for the SpCell of the terminal;
condition 6: the serving cell switches from a dormant bandwidth part BWP to a non-dormant BWP, and a PHR prohibit timer expires; and
condition 7: the PHR prohibit timer expires, and a first parameter is having a first value.

"Trigger a PHR" in this embodiment of this application may be understood as trigger PHR reporting, trigger a PHR process, or trigger a PHR procedure.

One or more of the condition 1 to the condition 7 are configured by a network device or specified in a protocol; and a PHR is triggered when any one of the conditions is satisfied.

For the foregoing condition 1, it may be understood that a path loss of at least one activated serving cell of any media access control MAC entity satisfies the second condition. The serving cell being in an activated state may be understood as the serving cell being in an activated state and working on a non-dormant BWP. The serving cell may include an SCell and an SpCell.

For the foregoing condition 2, the foregoing first PHR periodic timer is associated with switching of the SCell between the dormant BWP and the non-dormant BWP. The condition 2 may be understood as follows: whether the first PHR periodic timer expires is determined after the SCell switches from the dormant BWP to the non-dormant BWP; and a PHR is triggered in a case that the first PHR periodic timer expires. Duration of the first PHR periodic timer may be indicated by the network device, specified in the protocol, or reported by the terminal. In addition, a start or restart condition of the first PHR periodic timer may be indicated by the network device or specified in the protocol.

For the foregoing condition 3, it may be understood that a PHR is triggered when the cell group is resumed. A cell group being resumed may be understood as the cell group being resumed from a suspended state or resuming the cell group from a suspended state.

For the foregoing condition 4, it may be understood that a PHR is triggered when the SpCell is activated. An SpCell being activated may be understood as the SpCell being in an activated state and working on a BWP, where the terminal can monitor a PDCCH on the BWP. For example, the SpCell is working on a non-dormant BWP.

For the foregoing condition 5, the foregoing second PHR periodic timer is associated with the activated state of the SpCell. The condition 5 may be understood as follows: whether the second PHR periodic timer expires is determined after the SpCell is activated; and a PHR is triggered in a case that the second PHR periodic timer expires. Duration of the second PHR periodic timer may be indicated by the network device, specified in the protocol, or reported by the terminal. In addition, a start or restart condition of the second PHR periodic timer may be indicated by the network device or specified in the protocol.

For the foregoing condition 6, it may be understood as follows: a PHR is triggered in a case that the serving cell switches from the dormant BWP to the non-dormant BWP (for example, switched to a BWP specified by firstOutsideActiveTimeBWP-Id (indicating an ID of the BWP when the serving cell in an outside DRX period) or by firstWithinActiveTimeBWP-Id (indicating an ID of the BWP when the serving cell is in a DRX period)) and that the PHR prohibit timer expires. The network device may control, via physical layer signaling, the serving cell to switch from the dormant BWP to the non-dormant BWP; or control, by setting a timer, the serving cell to switch from the dormant BWP to the non-dormant BWP. This is not further limited herein. The PHR prohibit timer includes a phr-ProhibitTimer. The foregoing PHR prohibit timer is used to prohibit the terminal from triggering PHR. In an implementation, the serving cell switching from the dormant BWP to the non-dormant BWP includes any serving cell having an MAC entity with a configured grant (configured grant) switching from the dormant BWP to the non-dormant BWP.

For the foregoing condition 7, it may be understood as follows: a PHR is triggered in a case that the PHR prohibit timer expires and that the first parameter is having the first value. The first parameter is used to indicate whether a PHR is to be triggered. The first parameter may be a pending PHR trigger (PendingPHR-Trigger).

In an implementation, no PHR is triggered in a case that the serving cell switches from the dormant BWP to the non-dormant BWP and that the PHR prohibit timer has not expired. In another implementation, the first parameter PendingPHR-Trigger is set to true (true) in a case that the serving cell switches from the dormant BWP to the non-dormant BWP and that the PHR prohibit timer has not expired. A PHR is triggered in a case that the PHR prohibit timer expires and that the PendingPHR-Trigger is true.

It should be noted that, the condition 1 to the condition 7 are used as some trigger conditions for triggering PHR, which supplement the currently defined PHR triggers. Therefore, the terminal can have more PHR reporting opportunities, which helps the network device obtain PHRs so as to optimize network scheduling and control.

In the embodiments of this application, trigger conditions for PHR reporting are defined for application scenarios such as a suspended state of a cell group, an SpCell in a cell group being allowed to switch to an inactive state, and switching of a cell between a dormant BWP and a non-dormant BWP. Therefore, a terminal can have more PHR reporting opportunities without repeatedly sending PHRs of same serving cells, thereby ensuring that a network device can obtain PHRs more effectively in a more timely manner. This is conducive for the network device to optimize scheduling and control.

Optionally, in an embodiment, the second condition includes at least one of the following:
the path loss or an absolute value of a difference between the path loss and a preset reference path loss is greater than or equal to a first threshold;
the path loss or the absolute value of the difference between the path loss and the preset reference path loss is less than a second threshold;
the path loss or the absolute value of the difference between the path loss and the preset reference path loss is within a first preset range;
the path loss or the difference between the path loss and the preset reference path loss is greater than or equal to a third threshold;
the path loss or the difference between the path loss and the preset reference path loss is less than a fourth threshold; and
the path loss or the difference between the path loss and the preset reference path loss is within a second preset range.

In the embodiments of this application, the foregoing path loss may also be understood as power headroom. Values of the first threshold, the second threshold, the third threshold, the fourth threshold, the first preset range, and the second preset range may be specified in the protocol, configured by the network device, or reported by the terminal. The first threshold, the second threshold, the third threshold, the fourth threshold, the first preset range, and the second preset range are configured per (per) terminal, per cell, or per BWP. In other words, the first threshold, the second threshold, the third threshold, the fourth threshold, the first preset range, and the second preset range may be configured per UE, per SCell, or per BWP.

Optionally, in an embodiment, the condition 1 may further include at least one of the following:
the PHR prohibit timer expires; and
the MAC entity has an uplink resource for new data transmission.

In this embodiment of this application, for the condition 1, expiry of the PHR prohibit timer is further set, which reduces the number of PHRs sent by the terminal, thereby reducing power consumption of the terminal to avoid resource waste. The MAC entity having an uplink resource for new data transmission is further set, so that PHR reporting is more pertinent and more effective, and PHR reporting is triggered only when an uplink resource is available for new data transmission, thereby ensuring that the network device can obtain PHRs in a timely manner so as to optimize network scheduling and control.

Optionally, in an embodiment, the start or restart condition of the first PHR periodic timer in the condition 2 includes any one of the following:
the SCell switches from the dormant bandwidth part BWP to the non-dormant BWP; and
new data transmission and/or a resource for new data transmission is present after the SCell switches from the dormant BWP to the non-dormant BWP.

In this embodiment of this application, switching the SCell from the dormant BWP to the non-dormant BWP may be indicated by the network device or triggered by other events, for example, triggered via a timer. When a specified timer expires, switching the SCell from the dormant BWP to the non-dormant BWP is triggered.

Optionally, the first PHR periodic timer satisfies the following: in a case that the SCell switches from the non-dormant BWP to the dormant BWP before the first PHR periodic timer expires, the first PHR periodic timer stops timing.

For example, before the first PHR periodic timer expires, if the terminal receives physical signaling which switches the SCell from activated with non-dormant BWP to activated with dormant BWP, or receives an MAC CE which switches the SCell to the deactivated state, the first PHR periodic timer is stopped. Because the first PHR periodic timer is stopped when the SCell switches to the dormant BWP or to the deactivated state, triggering unnecessary PHR reporting upon expiry of the first PHR periodic timer can be avoided.

Optionally, the condition 3 further includes at least one of the following:
a first radio resource control RRC message (message) has been received, where the first RRC message is used to indicate resuming the cell group;
a second RRC message has been received, where the second RRC message is used to indicate adding or configuring the cell group to a non-suspended state;
a first MAC control element CE has been received, where the MAC CE is used to indicate resuming the cell group;
a second MAC CE has been received, where the second MAC CE is used to indicate switching the SpCell and the SCell in the cell group to the activated state;
first downlink control information (Downlink Control Information, DCI) has been received, where the first DCI is used to indicate resuming the cell group;
second DCI has been received, where the second DCI is used to indicate switching the SpCell and the SCell in the cell group to the non-dormant BWP; and
a suspend timer expires, where the suspend timer is used for triggering resumption of the cell group.

In this embodiment of this application, when configuring an SCG for the first time or reconfiguring an SCG for the terminal via an RRC message, the network device can directly configure a suspended state or directly configure a non-suspended state.

It should be understood that in this embodiment, one suspend timer may be managed for each cell group. A suspend timer corresponding to a cell group may be started or restarted when the cell group enters the suspended state; and the cell group is resumed when the suspend timer expires.

Optionally, in an embodiment, the SpCell is activated in at least one of the following manners:
a third RRC message has been received, where the third RRC message is used to indicate configuring the SpCell to the activated state;
a target object has been received, where the target object is used to indicate switching the SpCell to the activated state; and
a timer related to the SpCell has expired.

The target object includes at least one of a fourth RRC message, a third MAC CE, and third DCI. In other words, the SpCell may be configured or switched to the activated state under indication of at least one of RRC, MAC CE, and DCI.

Optionally, the start or restart condition of the second PHR periodic timer in the condition 5 includes at least one of the following:
the SpCell has switched to the activated state;
new data transmission is present after the SpCell is activated; and
a resource for new data transmission is present after the SpCell is activated.

In this embodiment of this application, the second PHR periodic timer may be started or restarted in a case that the SpCell switches to the activated state; the second PHR periodic timer may be started or restarted in a case that the SpCell has switched to the activated state and that new data transmission is present; the second PHR periodic timer may be started or restarted in a case that the SpCell has switched to the activated state and that a resource for new data transmission is present; or the second PHR periodic timer may be started or restarted in a case that the SpCell has switched to the activated state and that new data transmission and a resource for new data transmission are present.

Further, the second PHR periodic timer satisfies the following: in a case that target signaling is received before the second PHR periodic timer expires, the second PHR periodic timer stops timing, where the target signaling is used to indicate switching the SpCell to a state other than the activated state or other behavior.

The state or behavior may be understood as inactive, activated with dormant BWP, or a new state or behavior that is defined.

For example, before the second PHR periodic timer expires, if the terminal receives signaling sent by the network which switches the SpCell from the activated state to an inactive state, activated with dominant BWP, or a new state or behavior that is defined, or receives an MAC CE which switches the SCell to the deactivated state, the first PHR periodic timer and the second PHR periodic timer are stopped. Therefore, triggering unnecessary PHR reporting upon expiry of the second PHR periodic timer can be avoided.

It should be noted that, the condition 4 may further include: the PSCell has an uplink resource, that is, having a configured grant (configured grant).

Optionally, in an embodiment, the condition 2 may further include: a third PHR periodic timer expires, where the third PHR periodic timer is used for periodically triggering PHR reporting of the terminal.

Optionally, in an embodiment, in a case that a condition for triggering the PHR is the condition 7, the method further includes:
setting a value of the first parameter to the first value in a case that the terminal receives, before the PHR prohibit timer expires, control signaling which switches the serving cell from the dormant BWP to the non-dormant BWP.

In this embodiment of this application, the first value is used to indicate that a PHR needs to be triggered or that a PHR to be triggered or a pending PHR is present. For example, the first value may be "true". In other cases, the first parameter may be set to a second value, where the second value may be "false (false)".

Further, to reduce the amount of reported data so as to decrease resource overheads and improve effectiveness of a reported PHR, in this embodiment, in a case that a condition for triggering the PHR is neither the condition 6 nor the condition 7, it may be specified that the PHR includes a PHR of a serving cell that is in the activated state, where a path loss variation of the serving cell in the activated state is greater than or equal to a fifth preset value.

In this embodiment, the path loss variation means a variation of a PHR triggered this time with respect to a PHR reported last time. In a case that a PHR variation of a cell is relatively large, a corresponding PHR is reported; and in a case that the PHR variation of the cell is relatively small, the corresponding PHR does not need to be reported. That a condition for triggering the PHR is neither the condition 6 nor the condition 7 may be understood as that the condition for triggering the PHR is any one of the condition 1 to the condition 5 or may be another trigger condition defined in an existing protocol. This is not further limited herein.

For better understanding of this application, a detailed description is given below with specific embodiments.

Embodiment 1: The PHR is triggered when a path loss or power headroom of the serving cell in the activated state exceeds a preset threshold.

The PHR is triggered in a case that the PHR prohibit timer expires or has expired, that a value of a path loss or power headroom of at least one activated serving cell of any MAC entity satisfies a third condition, and that the MAC entity has an uplink resource for new data transmission. The third condition includes at least one of the following:
an absolute value of the path loss exceeds a preset threshold;
an absolute value of the power headroom exceeds a preset threshold;
the path loss belongs to a preset range;
the power headroom belongs to a preset range;
a path loss difference relative to a preset path loss value exceeds a preset threshold; and
a power headroom difference relative to a preset power headroom value exceeds a preset threshold.

The preset threshold, the preset range, the preset path loss value, and the preset power headroom value may be specified in the protocol, configured by the network, or reported by UE. The preset threshold, the preset range, the preset path loss value, and the preset power headroom value may be configured per UE, per SCell, or per BWP. The serving cell includes an SCell and an SpCell.

Embodiment 2: The first PHR periodic timer is started or restarted when the SCell switches from the dormant BWP to the non-dormant BWP; and the PHR is triggered after the first PHR periodic timer expires.

Optionally, the UE receives an MAC CE which switches an SCell 1 from deactivated to activated with dormant BWP, or receives an RRC message which configures the SCell 1 to be activated with dormant BWP; and no PHR is triggered in this process.

Optionally, the UE receives physical layer signaling which switches the SCell 1 from activated with dormant BWP to activated with non-dormant BWP; and the SCell 1 enters the activated state. In this process, a condition for starting or restarting the first PHR periodic timer (for example, the phr-PeriodicDormantTimer) includes:
condition A: upon switching from the dormant BWP to the non-dormant BWP; and
condition B: when new data transmission and/or a resource for new data transmission is present after switching from the dormant BWP to the non-dormant BWP.

The PHR is triggered after the third PHR periodic timer (for example, the phr-PeriodicTimer) and/or the first PHR periodic timer expires; and the third PHR periodic timer is used for periodically triggering PHR reporting of the terminal.

Optionally, before the first PHR periodic timer expires, if the UE receives physical layer signaling which switches the SCell 1 from activated with non-dormant BWP to activated with dormant BWP or receives an MAC CE which switches the SCell to the deactivated state, the first PHR periodic timer is stopped.

A related parameter (for example, duration) of the first PHR periodic timer may be specified in the protocol, configured by the network, or reported by the UE. The first PHR periodic timer may have a per UE parameter, a per SCell parameter, or a per BWP parameter.

Duration of the first PHR periodic timer may satisfy the following:
1. being the same as or different from duration of another PHR periodic timer; and
2. being scaled up by a certain scaling factor (Scaling Factor) based on configuration of another PHR periodic timer.

Embodiment 3: A PHR is triggered upon resumption of cell group. This embodiment is described by using an example with a PHR triggered upon resumption of the SCG(resume SCG).

The PHR is triggered upon resumption of the SCG from the suspended state in at least one the following manners:
reception of an RRC message which indicates resuming the SCG;
reception of an MAC CE which indicates resuming the SCG;
reception of DCI which indicates resuming the SCG;
resuming the SCG upon expiry of the suspend timer (SCG suspend Timer); and
reception of DCI which indicates switching the PSCell and SCG SCells from the dormant BWP to the non-dormant BWP.

The SCG suspend Timer may be specified in the protocol, configured by the network, or reported by the UE. Network configuration may be sent to the UE via broadcasting or dedicated signaling.

Embodiment 4: A PHR is triggered when an SpCell is activated. Description is provided by using an example where a PHR is triggered upon activation of a PSCell.

The PHR is triggered upon activation of the PSCell in at least one of the following manners:
use of an RRC message to configure the PSCell to the activated state, for example, the SCG being configured to the activated state at addition or modification of the SCG;
use of an RRC message or MAC CE to switch the PSCell from deactivated, activated with dormant BWP, or a new state/behavior to activated, where the new state/behavior is neither exactly the same as deactivated state behavior, nor exactly the same as the activated with dormant BWP behavior;
use of DCI signaling to switch the PSCell from the dormant BWP or a new state/behavior to the activated state, where the new state or behavior is neither exactly the same as deactivated state behavior, nor exactly the same as behavior under the dormant BWP; and
expiry of a timer (PSCell PHR timer) related to the SpCell.

The PSCell PHR timer may be specified in the protocol, configured by the network, or reported by the UE. Network configuration may be sent to the UE via broadcasting or dedicated signaling.

Optionally, in an embodiment, the activated PSCell is a PSCell with a configured grant.

Embodiment 5: The second PHR periodic timer (for example, phr-PeriodicPScellTimer) is started or restarted upon switching of the SpCell from another state/behavior to the activated state; and a PHR is triggered after the second PHR periodic timer expires. This embodiment is described in detail by using an example where the SpCell is a PSCell.

Step 1: The PSCell is inactive.

Step 2: The second PHR periodic timer is started or restarted upon switching of the PSCell from the inactive state to the activated state when the UE receives an RRC message, an MAC CE, or physical layer signaling, or when the timer expires; or the second PHR periodic timer is started or restarted when new data transmission or a resource for new data transmission is present after the PSCell is activated.

Step 3a: The PHR is triggered after the second PHR periodic timer expires.

Step 3b: Before the second PHR periodic timer expires, if the UE receives an RRC message, MAC CE, or physical layer signaling which switches the PSCell from the activated state to another state or behavior, the PHR periodic timer is stopped.

A related parameter (for example, duration) of the second PHR periodic timer may be specified in the protocol, configured by the network, or reported by the UE. The second PHR periodic timer may have a per UE parameter, a per SCell parameter, or a per BWP parameter.

The duration of the second PHR periodic timer may be the same as or different from that of another PHR periodic timer, or is scaled down based on the duration of another PHR periodic timer, that is, the duration is scaled down by a scaling factor.

It should be noted that, the PHR reporting method provided in the embodiments of this application may be performed by a PHR reporting apparatus, or a control module in a PHR reporting apparatus, where the control module is configured for performing the PHR reporting method. In the embodiments of this application, the PHR reporting method being performed by a PHR reporting apparatus is used as an example to describe the apparatus for performing the PHR reporting method provided in the embodiments of this application.

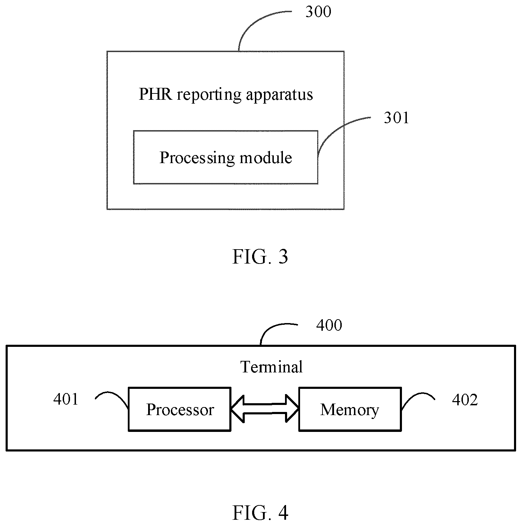

Referring to FIG. 3, FIG. 3 is a structural diagram of a PHR reporting apparatus according to an embodiment of this application. As shown in FIG. 3, the PHR reporting apparatus 300 includes:
a processing module 301, configured to trigger a PHR in a case that a first condition is satisfied.

The first condition includes any one of the following:
condition 1: a path loss of at least one serving cell of any media access control MAC entity satisfies a second condition, where the serving cell is in an activated state;
condition 2: a first PHR periodic timer expires, where the first PHR periodic timer is used for periodically triggering PHRs for an SCell of the terminal;
condition 3: a cell group is resumed, where the cell group includes a master cell group MCG or a secondary cell group SCG;
condition 4: a special cell SpCell is activated, where the special cell includes a primary cell PCell or a primary secondary cell PSCell;
condition 5: a second PHR periodic timer expires, where the second PHR periodic timer is used for periodically triggering PHRs for the SpCell of the terminal;
condition 6: the serving cell switches from a dormant bandwidth part BWP to a non-dormant BWP, and a PHR prohibit timer expires; and
condition 7: the PHR prohibit timer expires, and a first parameter is having a first value.

Optionally, the second condition includes at least one of the following:
the path loss or an absolute value of a difference between the path loss and a preset reference path loss is greater than or equal to a first threshold;
the path loss or the absolute value of the difference between the path loss and the preset reference path loss is less than a second threshold;
the path loss or the absolute value of the difference between the path loss and the preset reference path loss is within a first preset range;
the path loss or the difference between the path loss and the preset reference path loss is greater than or equal to a third threshold;
the path loss or the difference between the path loss and the preset reference path loss is less than a fourth threshold; and
the path loss or the difference between the path loss and the preset reference path loss is within a second preset range.

Optionally, the condition 1 further includes at least one of the following:
the PHR prohibit timer expires; and
the MAC entity has an uplink resource for new data transmission.

Optionally, a start or restart condition of the first PHR periodic timer in the condition 2 includes any one of the following:
the SCell switches from the dormant bandwidth part BWP to the non-dormant BWP; and
new data transmission and/or a resource for new data transmission is present after the SCell switches from the dormant BWP to the non-dormant BWP.

Optionally, the first PHR periodic timer satisfies the following: in a case that the SCell switches from the non-dormant BWP to the dormant BWP before the first PHR periodic timer expires, the first PHR periodic timer stops timing.

Optionally, the condition 3 further includes at least one of the following:
a first radio resource control RRC message has been received, where the first RRC message is used to indicate resuming the cell group;
a second RRC message has been received, where the second RRC message is used to indicate adding or configuring the cell group to a non-suspended state;
a first MAC control element CE has been received, where the MAC CE is used to indicate resuming the cell group;
a second MAC CE has been received, where the second MAC CE is used to indicate switching the SpCell and the SCell in the cell group to the activated state;
first downlink control information DCI has been received, where the first DCI is used to indicate resuming the cell group;
second DCI has been received, where the second DCI is used to indicate switching the SpCell and the SCell in the cell group to the non-dormant BWP; and
a suspend timer expires, where the suspend timer is used for triggering resumption of the cell group.

Optionally, the SpCell is activated in at least one of the following manners:
a third RRC message has been received, where the third RRC message is used to indicate configuring the SpCell to the activated state;
a target object has been received, where the target object is used to indicate switching the SpCell to the activated state; and
a timer related to the SpCell has expired.

Optionally, the target object includes at least one of a fourth RRC message, a third MAC CE, and third DCI.

Optionally, a start or restart condition of the second PHR periodic timer includes at least one of the following:
the SpCell has switched to the activated state;
new data transmission is present after the SpCell is activated; and
a resource for new data transmission is present after the SpCell is activated.

Optionally, the second PHR periodic timer satisfies the following: in a case that target signaling is received before the second PHR periodic timer expires, the second PHR periodic timer stops timing, where the target signaling is used to indicate switching the SpCell to a state other than the activated state or other behavior.

Optionally, in a case that a condition for triggering the PHR is the condition 7, the processing module is further configured to set a value of the first parameter to the first value in a case that the serving cell is performing an operation of switching from the dormant BWP to the non-dormant BWP and that the PHR prohibit timer is running, before the PHR prohibit timer expires.

Optionally, in a case that a condition for triggering the PHR is neither the condition 6 nor the condition 7, the PHR includes PHRs of all serving cells that are in the activated state, where a PHR variation of the serving cell in the activated state is greater than or equal to a fifth preset value, and a reference value of the PHR variation is a PHR of the serving cell that is sent last time.

The PHR reporting apparatus provided in this embodiment of this application can implement the processes in the method embodiment in FIG. 2. To avoid repetition, details are not described herein again.

The PHR reporting apparatus in this embodiment of this application may be an apparatus, or may be a component, an integrated circuit, or a chip in a terminal. The apparatus may be a mobile terminal or a non-mobile terminal. For example, the mobile terminal may include but is not limited to the types of the terminal 11 enumerated above; and the non-mobile terminal may be a network attached storage (Network Attached Storage, NAS), a personal computer (personal computer, PC), a television (television, TV), an automated teller machine, a self-service machine, or the like. This is not specifically limited in this embodiment of this application.

The PHR reporting apparatus in this embodiment of this application may be an apparatus with an operating system. The operating system may be an Android (Android) operating system, an IOS operating system, or another possible operating system, which is not specifically limited in this embodiment of this application.

The PHR reporting apparatus provided in this embodiment of this application can implement the processes implemented in the method embodiment in FIG. 2, with the same technical effects achieved. To avoid repetition, details are not described herein again.

Optionally, as shown in FIG. 4, an embodiment of this application further provides a terminal 400, including a processor 401, a memory 402, and a program or instructions stored in the memory 402 and executable on the processor 401. When the program or instructions are executed by the processor 401, the processes of the foregoing PHR reporting method embodiments are implemented, with the same technical effects achieved.

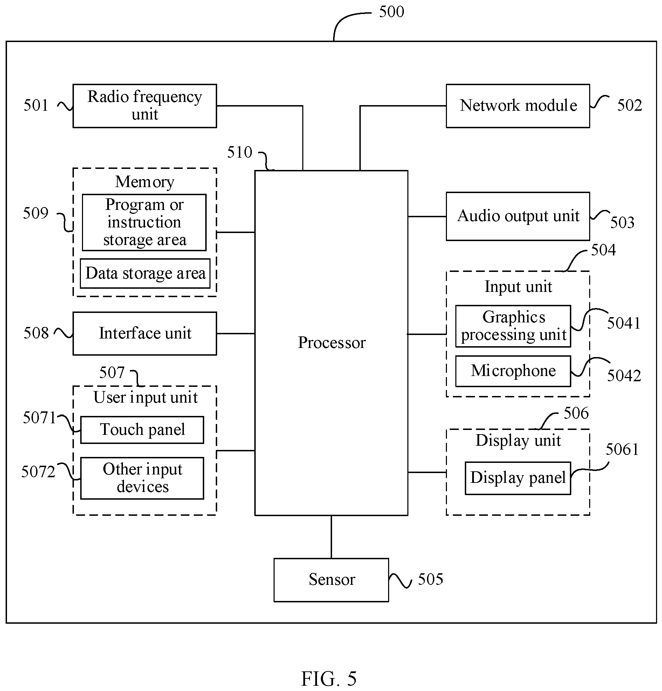

FIG. 5 is a schematic diagram of a hardware structure of a terminal for implementing the embodiments of this application.

The terminal 500 includes but is not limited to components such as a radio frequency unit 501, a network module 502, an audio output unit 503, an input unit 504, a sensor 505, a display unit 506, a user input unit 507, an interface unit 508, a memory 509, and a processor 510.

A person skilled in the art can understand that the terminal 500 may further include a power supply (for example, a battery) supplying power to the components, and the power supply may be logically connected to the processor 510 through a power management system. In this way, functions such as charge management, discharge management, and power consumption management are implemented through the power management system. The structure of the terminal shown in FIG. 5 does not constitute any limitation on the terminal. The terminal may include more or fewer components than shown in the figure, or combine some components, or have different arrangements of components. Details are not further described herein.

It should be understood that in this embodiment of this application, the input unit 504 may include a graphics processing unit (Graphics Processing Unit, GPU) 5041 and a microphone 5042. The graphics processing unit 5041 processes image data of a still picture or video obtained by an image capture apparatus (such as a camera) in a picture capture mode or a video capture mode. The display unit 506 may include a display panel 5061. The display panel 5061 may be configured in a form of a liquid crystal display, organic light-emitting diodes, or the like. The user input unit 507 may include a touch panel 5071 and other input devices 5072. The touch panel 5071 is also referred to as a touchscreen. The touch panel 5071 may include two parts: a touch detection apparatus and a touch controller. The other input devices 5072 may include but are not limited to a physical keyboard, a function button (such as a volume control button or a power on/off button), a trackball, a mouse, a joystick, and the like. Details are not described herein.

In this embodiment of this application, the radio frequency unit 501 receives downlink data from a network-side device, and transmits the downlink data to the processor 510 for processing; and in addition, transmits uplink data to the network device. Generally, the radio frequency unit 501 includes but is not limited to an antenna, at least one amplifier, a transceiver, a coupler, a low noise amplifier, a duplexer, and the like.

The memory 509 may be configured to store software programs or instructions and various data. The memory 109 may mainly include a program/instruction storage area and a data storage area. The program/instruction storage area may store an operating system, an application program or instructions required by at least one function (for example, a sound playback function or an image playback function), and the like. In addition, the memory 509 may include a high-speed random access memory, and may further include a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory, for example, at least one disk storage device, a flash memory device, or other non-volatile solid state storage devices.

The processor 510 may include one or more processing units. Optionally, an application processor and a modem processor may be integrated in the processor 510. The application processor primarily processes the operating system, user interfaces, application programs or instructions, and the like. The modem processor primarily processes radio communication, for example, being a baseband processor. It can be understood that the modem processor may alternatively be not integrated in the processor 510.

The processor 510 is configured to trigger a PHR in a case that a first condition is satisfied.

The first condition includes any one of the following:
condition 1: a path loss of at least one serving cell of any media access control MAC entity satisfies a second condition, where the serving cell is in an activated state;
condition 2: a first PHR periodic timer expires, where the first PHR periodic timer is used for periodically triggering PHRs for an SCell of the terminal;
condition 3: a cell group is resumed, where the cell group includes a master cell group MCG or a secondary cell group SCG;
condition 4: a special cell SpCell is activated, where the special cell includes a primary cell PCell or a primary secondary cell PSCell;
condition 5: a second PHR periodic timer expires, where the second PHR periodic timer is used for periodically triggering PHRs for the SpCell of the terminal;
condition 6: the serving cell switches from a dormant bandwidth part BWP to a non-dormant BWP, and a PHR prohibit timer expires; and
condition 7: the PHR prohibit timer expires, and a first parameter is having a first value.

It should be understood that, in this embodiment, the processor 510 and the radio frequency unit 501 can implement processes implemented by the terminal in the method embodiment in FIG. 2. To avoid repetition, details are not described herein again.

An embodiment of this application further provides a readable storage medium, where the readable storage medium stores a program or instructions. When the program or instructions are executed by a processor, the processes of the foregoing PHR reporting method embodiments can be implemented, with the same technical effects achieved. To avoid repetition, details are not described herein again.

The processor is a processor in the electronic device described in the preceding embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communications interface, the communications interface is coupled to the processor, and the processor is configured to run a program or instructions to implement the processes of the foregoing PHR reporting method embodiments, with the same technical effects achieved. To avoid repetition, details are not repeated herein.

It should be understood that the chip mentioned in this embodiment of this application may also be referred to as a system-level chip, a system chip, a chip system, a system-on-chip, or the like.

It may be understood that the embodiments described in this application may be implemented by hardware, software, firmware, middleware, microcode, or a combination thereof. For hardware implementation, a module, a unit, a submodule, a subunit, and the like may be implemented in one or more application specific integrated circuits (Application Specific Integrated Circuit, ASIC), digital signal processors (Digital Signal Processor, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units for performing the functions described in this application, or a combination thereof.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. Furthermore, it should be noted that, in the scope of the method and apparatus in the embodiments of this application, execution of the functions is not limited to the order shown or described, and the functions may alternatively be executed in a substantially simultaneous manner or in a reverse order. For example, the described method may be performed in an order different from that described, and steps may be added, omitted, or combined. In addition, features described with reference to some examples may be combined in other examples.

According to the description of the foregoing implementations, persons skilled in the art can clearly understand that the method in the foregoing embodiments may be implemented by software in addition to a necessary universal hardware platform or by hardware only. In most cases, the former is a more preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a base station, or the like) to perform the methods described in the embodiments of this application.

The foregoing describes the embodiments of this application with reference to the accompanying drawings. However, this application is not limited to these specific embodiments. The specific embodiments are merely illustrative rather than restrictive. As inspired by this application, persons of ordinary skill in the art may develop many other manners without departing from principles of this application and the protection scope of the claims, and all such manners fall within the protection scope of this application.

## Claims

1. A power headroom report PHR reporting method, applied to a terminal and comprising:
triggering a PHR in a case that a first condition is satisfied, wherein
the first condition comprises any one of the following:
condition 1: a path loss of at least one serving cell of any media access control MAC entity satisfies a second condition, wherein the serving cell is in an activated state;
condition 2: a first PHR periodic timer expires, wherein the first PHR periodic timer is used for periodically triggering PHRs for an SCell of the terminal;
condition 3: a cell group is resumed, wherein the cell group comprises a master cell group MCG or a secondary cell group SCG;
condition 4: a special cell SpCell is activated, wherein the special cell comprises a primary cell PCell or a primary secondary cell PSCell;
condition 5: a second PHR periodic timer expires, wherein the second PHR periodic timer is used for periodically triggering PHRs for the SpCell of the terminal;
condition 6: the serving cell switches from a dormant bandwidth part BWP to a non-dormant BWP, and a PHR prohibit timer expires; and
condition 7: the PHR prohibit timer expires, and a first parameter is having a first value.

2. The method according to claim 1, wherein the second condition comprises at least one of the following:
the path loss or an absolute value of a difference between the path loss and a preset reference path loss is greater than or equal to a first threshold;
the path loss or the absolute value of the difference between the path loss and the preset reference path loss is less than a second threshold;
the path loss or the absolute value of the difference between the path loss and the preset reference path loss is within a first preset range;
the path loss or the difference between the path loss and the preset reference path loss is greater than or equal to a third threshold;
the path loss or the difference between the path loss and the preset reference path loss is less than a fourth threshold; and
the path loss or the difference between the path loss and the preset reference path loss is within a second preset range.

3. The method according to claim 1, wherein the condition 1 further comprises at least one of the following:
the PHR prohibit timer expires; and
the MAC entity has an uplink resource for new data transmission.

4. The method according to claim 1, wherein a start or restart condition of the first PHR periodic timer comprises any one of the following:
the SCell switches from the dormant BWP to the non-dormant BWP; and
new data transmission and/or a resource for new data transmission is present after the SCell switches from the dormant BWP to the non-dormant BWP.

5. The method according to claim 4, wherein the first PHR periodic timer satisfies the following: in a case that the SCell switches from the non-dormant BWP to the dormant BWP before the first PHR periodic timer expires, the first PHR periodic timer stops timing.

6. The method according to claim 1, wherein the condition 3 further comprises at least one of the following:
a first radio resource control RRC message has been received, wherein the first RRC message is used to indicate resuming the cell group;
a second RRC message has been received, wherein the second RRC message is used to indicate adding or configuring the cell group to a non-suspended state;
a first MAC control element CE has been received, wherein the MAC CE is used to indicate resuming the cell group;
a second MAC CE has been received, wherein the second MAC CE is used to indicate switching the SpCell and the SCell in the cell group to the activated state;
first downlink control information DCI has been received, wherein the first DCI is used to indicate resuming the cell group;
second DCI has been received, wherein the second DCI is used to indicate switching the SpCell and the SCell in the cell group to the non-dormant BWP; and
a suspend timer expires, wherein the suspend timer is used for triggering resumption of the cell group.

7. The method according to claim 1, wherein the SpCell is activated in at least one of the following manners:
a third RRC message has been received, wherein the third RRC message is used to indicate configuring the SpCell to the activated state;
a target object has been received, wherein the target object is used to indicate switching the SpCell to the activated state; and
a timer related to the SpCell has expired.

8. The method according to claim 7, wherein the target object comprises at least one of a fourth RRC message, a third MAC CE, and third DCI.

9. The method according to claim 1, wherein a start or restart condition of the second PHR periodic timer comprises at least one of the following:
the SpCell has switched to the activated state;
new data transmission is present after the SpCell is activated; and
a resource for new data transmission is present after the SpCell is activated.

10. The method according to claim 9, wherein the second PHR periodic timer satisfies the following: in a case that target signaling is received before the second PHR periodic timer expires, the second PHR periodic timer stops timing, wherein the target signaling is used to indicate switching the SpCell to a state other than the activated state or other behavior.

11. The method according to claim 1, wherein in a case that a condition for triggering the PHR is the condition 7, the method further comprises:
setting a value of the first parameter to the first value in a case that the serving cell is performing an operation of switching from the dormant BWP to the non-dormant BWP and that the PHR prohibit timer is running, before the PHR prohibit timer expires.

12. The method according to claim 1, wherein in a case that a condition for triggering the PHR is neither the condition 6 nor the condition 7, the PHR comprises PHRs of all serving cells that are in the activated state, wherein a PHR variation of the serving cell in the activated state is greater than or equal to a fifth preset value, and a reference value of the PHR variation is a PHR of the serving cell that is sent last time.

13. A power headroom report PHR reporting apparatus, applied to a terminal and comprising:
a processing module, configured to trigger a PHR in a case that a first condition is satisfied, wherein
the first condition comprises any one of the following:
condition 1: a path loss of at least one serving cell of any media access control MAC entity satisfies a second condition, wherein the serving cell is in an activated state;
condition 2: a first PHR periodic timer expires, wherein the first PHR periodic timer is used for periodically triggering PHRs for an SCell of the terminal;
condition 3: a cell group is resumed, wherein the cell group comprises a master cell group MCG or a secondary cell group SCG;
condition 4: a special cell SpCell is activated, wherein the special cell comprises a primary cell PCell or a primary secondary cell PSCell;
condition 5: a second PHR periodic timer expires, wherein the second PHR periodic timer is used for periodically triggering PHRs for the SpCell of the terminal;
condition 6: the serving cell switches from a dormant bandwidth part BWP to a non-dormant BWP, and a PHR prohibit timer expires; and
condition 7: the PHR prohibit timer expires, and a first parameter is having a first value.

14. The apparatus according to claim 13, wherein the second condition comprises at least one of the following:
the path loss or an absolute value of a difference between the path loss and a preset reference path loss is greater than or equal to a first threshold;
the path loss or the absolute value of the difference between the path loss and the preset reference path loss is less than a second threshold;
the path loss or the absolute value of the difference between the path loss and the preset reference path loss is within a first preset range;
the path loss or the difference between the path loss and the preset reference path loss is greater than or equal to a third threshold;
the path loss or the difference between the path loss and the preset reference path loss is less than a fourth threshold; and
the path loss or the difference between the path loss and the preset reference path loss is within a second preset range.

15. The apparatus according to claim 13, wherein the condition 1 further comprises at least one of the following:
the PHR prohibit timer expires; and
the MAC entity has an uplink resource for new data transmission.

16. The apparatus according to claim 13, wherein a start or restart condition of the first PHR periodic timer comprises any one of the following:
the SCell switches from the dormant BWP to the non-dormant BWP; and
new data transmission and/or a resource for new data transmission is present after the SCell switches from the dormant BWP to the non-dormant BWP.

17. The apparatus according to claim 16, wherein the first PHR periodic timer satisfies the following: in a case that the SCell switches from the non-dormant BWP to the dormant BWP before the first PHR periodic timer expires, the first PHR periodic timer stops timing.

18. The apparatus according to claim 13, wherein the condition 3 further comprises at least one of the following:
a first radio resource control RRC message has been received, wherein the first RRC message is used to indicate resuming the cell group;
a second RRC message has been received, wherein the second RRC message is used to indicate adding or configuring the cell group to a non-suspended state;
a first MAC control element CE has been received, wherein the MAC CE is used to indicate resuming the cell group;
a second MAC CE has been received, wherein the second MAC CE is used to indicate switching the SpCell and the SCell in the cell group to the activated state;
first downlink control information DCI has been received, wherein the first DCI is used to indicate resuming the cell group;
second DCI has been received, wherein the second DCI is used to indicate switching the SpCell and the SCell in the cell group to the non-dormant BWP; and
a suspend timer expires, wherein the suspend timer is used for triggering resumption of the cell group.

19. The apparatus according to claim 13, wherein the SpCell is activated in at least one of the following manners:
a third RRC message has been received, wherein the third RRC message is used to indicate configuring the SpCell to the activated state;
a target object has been received, wherein the target object is used to indicate switching the SpCell to the activated state; and
a timer related to the SpCell has expired.

20. The apparatus according to claim 19, wherein the target object comprises at least one of a fourth RRC message, a third MAC CE, and third DCI.

21. The apparatus according to claim 13, wherein a start or restart condition of the second PHR periodic timer comprises at least one of the following:
the SpCell has switched to the activated state;
new data transmission is present after the SpCell is activated; and
a resource for new data transmission is present after the SpCell is activated.

22. The apparatus according to claim 21, wherein the second PHR periodic timer satisfies the following: in a case that target signaling is received before the second PHR periodic timer expires, the second PHR periodic timer stops timing, wherein the target signaling is used to indicate switching the SpCell to a state other than the activated state or other behavior.

23. The apparatus according to claim 13, wherein in a case that a condition for triggering the PHR is the condition 7, the processing module is further configured to set a value of the first parameter to the first value in a case that the serving cell is performing an operation of switching from the dormant BWP to the non-dormant BWP and that the PHR prohibit timer is running, before the PHR prohibit timer expires.

24. The apparatus according to claim 13, wherein in a case that a condition for triggering the PHR is neither the condition 6 nor the condition 7, the PHR comprises PHRs of all serving cells that are in the activated state, wherein a PHR variation of the serving cell in the activated state is greater than or equal to a fifth preset value, and a reference value of the PHR variation is a PHR of the serving cell that is sent last time.

25. A terminal, comprising a memory, a processor, and a program stored in the memory and executable on the processor, wherein when the program is executed by the processor, the steps of the PHR reporting according to any one of claims 1 to 12 are implemented.

26. A readable storage medium, wherein the readable storage medium stores a program or instructions, and when the program or instructions are executed by a processor, the steps of the PHR reporting method according to any one of claims 1 to 12 are implemented.

27. A chip, wherein the chip comprises a processor and a communications interface, wherein the communications interface is coupled to the processor, and the processor is configured to run a program or instructions to implement the method according to any one of claims 1 to 12.

28. A terminal, wherein the terminal is configured to perform the steps of the PHR reporting method according to any one of claims 1 to 12.

29. A computer program product, wherein the computer program product is executed by at least one processor so as to implement the PHR reporting method according to any one of claims 1 to 12.
